# FASCICULE DE BREVET EUROPEEN

(11) **EP 1 474 305 B1**
(45) Date de publication et mention de la délivrance du brevet: **13.09.2006**
(21) Numéro de dépôt: 03717386.1
(22) Date de dépôt: 07.02.2003
(51) Int. Cl.: B60K 37/06, G02F 1/1335

(54) **DISPOSITIF D' AFFICHAGE D' INFORMATION POUR VEHICULES**
INFORMATIONSANZEIGEGERÄT FÜR FAHRZEUGE
DATA DISPLAY DEVICE FOR VEHICLES

(30) Priorité: 07.02.2002 FR 0201504
(43) Date de publication de la demande: 10.11.2004
(73) Titulaire: JOHNSON CONTROLS AUTOMOTIVE ELECTRONICS, 95526 Cergy Pontoise Cédex (FR)
(72) Inventeur: FOURNIER, Joel, F-95800 Cergy Saint Christophe (FR)
(74) Mandataire: Bloch, Gérard
(86) Numéro de dépôt international: PCT/FR2003/000404
(87) Numéro de publication internationale: WO 2003/066366

(56) Documents cités:
- EP-A- 0 941 887
- EP-A- 1 065 079
- DE-A- 19 609 390
- US-A- 4 367 467

## Description

L'invention se rapporte au domaine des véhicules, notamment les véhicules automobiles, et en particulier à l'affichage d'informations à destination des personnes qui se trouvent à l'intérieur du véhicule.

Pour l'affichage d'informations en relation avec le fonctionnement du véhicule ou de ses accessoires, on utilise maintenant des afficheurs à cristaux liquides (LCD). On utilise aussi des afficheurs luminescents tels que des diodes electro-luminescentes (LED) ou bien des afficheurs fluorescents à vide, connus communément sous le sigle VFD (vacuum fluorescent display). Ces derniers comprennent un tube cathodique de type triode avec une cathode chauffée émettrice, des grilles accélératrices et des anodes recouvertes de phosphore. Les grilles et les anodes sont agencées selon un motif déterminé correspondant à l'information que l'on souhaite afficher. Un tel afficheur présente l'avantage d'être très lumineux lorsqu'il est actif. Il est à noter que sa surface est noire lorsqu'il ne l'est pas. L'image formée est donc bien contrastée et se distingue de façon satisfaisante à distance usuelle. Cependant, il est monté sur une carte à circuit imprimé et occupe un volume relativement important par rapport à l'espace disponible pour l'affichage. Sa mise en oeuvre n'est pas simple. Il se retrouve ainsi souvent enfoncé à une certaine distance en arrière de la surface de la planche de bord. Comme l'ouverture à travers ce dernier ne peut être très large, on est confronté au problème de disposer d'un faible angle de vision dans lequel on peut voir l'image affichée. Les personnes qui, à l'intérieur de l'habitacle du véhicule, ne sont dans l'axe de l'afficheur doivent donc se déplacer en direction du cône dans lequel l'afficheur est visible. Le déplacement est d'autant plus important et incommode que la distance de l'observateur à la planche de bord est faible comme c' est le cas dans un véhicule automobile.

A côté de ces moyens d'affichage, on trouve les boutons de commande de la fonction concernée, par exemple la ventilation, le chauffage et, le cas échéant, la climatisation. Ces boutons sont éclairés la nuit, éventuellement depuis la face arrière au moyen d'une source lumineuse éclairant à travers un élément de paroi translucide. Pour en faciliter la reconnaissance, le bouton comporte souvent un élément translucide sur lequel on a dessiné un symbole approprié.

Un dispositif de commande incluant les caractéristiques du préambule

de la revendication indépendante est connu du document EP-A-1065079. La demanderesse s'est fixé comme objectif de rendre l'image, fournie par un afficheur de type VFD ou équivalent, visible depuis n'importe quelle place dans l'habitacle du véhicule, sur ces boutons (de jour comme de nuit).

La demanderesse s'est également fixé comme objectif de rendre la lecture des différentes informations plus faciles en les concentrant dans un espace réduit.

La demanderesse est parvenue à atteindre ces objectifs avec un dispositif de commande d'une fonction d'un véhicule comprenant au moins un organe manuel de commande et un moyen d'affichage d'informations concernant ladite fonction comportant un afficheur luminescent, caractérisé par le fait qu'un moyen optique est interposé entre l'afficheur et l'organe manuel de commande, ce dernier comprenant une surface formant un écran de visualisation d'une image projetée depuis le dit afficheur par le moyen optique.

Par afficheur luminescent, on désigne en particulier les afficheurs de type VFD. Cependant l'invention concerne également tout type d'afficheur émettant une image susceptible d'être projetée par un moyen optique sur une surface formant écran.

En particulier, l'image est projetée par un moyen optique constitué par une lentille disposée entre l'afficheur et la surface de l'organe manuel de commande.

La solution de l'invention, en déportant l'image à la surface de l'organe manuel de commande, rend son observation plus aisée, même si on n'est pas placé directement en face de l'afficheur.

D'autres caractéristiques et avantages apparaîtront à la lecture de la description qui suit d'un mode de réalisation, en regard des dessins annexés sur lesquels :
la figure 1 est une vue de face d'un bouton de commande sur une planche de bord de véhicule,
la figure 2 est une vue en coupe longitudinale dans le sens AA de la figure 1.

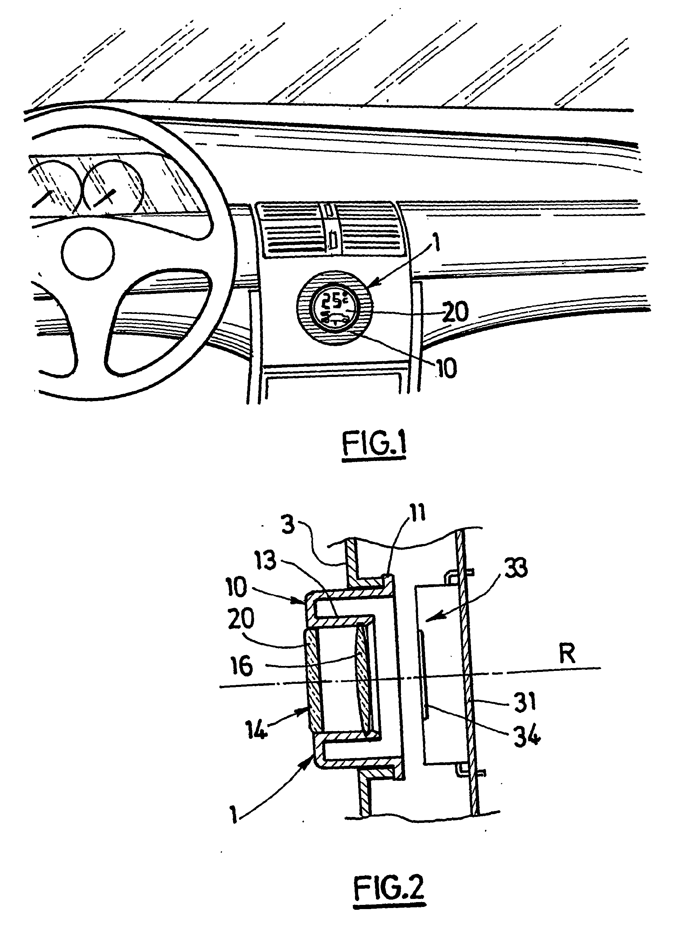

La figure 1 montre une planche de bord d'un véhicule automobile représenté de manière très schématique. Parmi les différentes commandes ou indicateurs, on a représenté un bouton 1 commandant la climatisation. Il s'agit d'un bouton rotatif avec une face visible depuis l'habitacle du véhicule. Elle comporte une partie annulaire 10 opaque et une partie centrale 20 translucide qui indique ici une température, par exemple assignée, ainsi qu'un état de l'admission de l'air à l'intérieur du véhicule.

Sur la figure 2, la coupe longitudinale montre le bouton 1 logé dans la paroi 3 de la planche de bord. Il est retenu en butée axiale par une collerette 11 s'étendant en direction radiale sur le pourtour de la partie annulaire 10 cylindrique. La collerette autorise la rotation du bouton autour de son axe R. Cette partie du bouton est réalisée dans un matériau plastique opaque. Un élément concentrique 13 de forme tubulaire est fermé par une paroi translucide. Cette paroi 14 comprend une face avant visible de l'habitacle du véhicule. Plus précisément cette paroi est translucide. Elle a été traitée pour former écran de visualisation d'une image formée sur sa face arrière. A distance de la paroi 14 et parallèlement à celle-ci, on a monté une lentille 16, formant un moyen optique, dans l'élément tubulaire 13. A distance du bouton, à l'intérieur de la planche de bord, on trouve un support 31 comportant un circuit imprimé sur lequel est monté l'afficheur 33 qui ici est de type VFD. De manière connue l'afficheur comprend un écran 34 sur lequel se forme l'image lumineuse source. L'afficheur 33, la lentille 16 et la paroi 14 forment un système optique. On détermine les paramètres de ce dernier de telle façon que l'image émise par l'afficheur soit projetée sur la face arrière 35 de la paroi transparente du bouton.

Quand l'utilisateur, depuis l'habitacle, agit sur le bouton de commande manuelle en le faisant tourner autour de son axe R, il met en oeuvre une fonction, ici la climatisation. Les moyens de transmission de la commande à la climatisation ne sont pas représentés sur la figure 2. Cette commande a pour effet de modifier l'affichage sur l'écran de l'afficheur. L'utilisateur suit l'évolution de sa commande, par exemple l'assignation d'une température, avec l'image qui est projetée sur la face avant du bouton. On a représenté sur la figure 1 l'affichage de la température et de la commande des volets d'entrée d'air extérieur.

Ainsi grâce à l'invention, on a pu reporter en façade de la planche de bord, les informations produites sur un afficheur luminescent, et en particulier sur un afficheur de type VFD. Cette projection est centralisée sur l'organe de commande ce qui est d'un grand confort visuel. On n'a pas besoin de parcourir la surface de la planche de bord pour rechercher l'information. On observe aussi que cette information, bien que projetée sur un organe mobile en rotation, reste parfaitement immobile puisque la lentille qui projette l'image objet depuis l'afficheur sur la face arrière du bouton ne tourne qu'autour de son axe focal R.
Cette disposition assure ainsi un confort de visualisation et une sécurité à l'utilisateur

## Revendications

1. Dispositif de commande d'une fonction d'un véhicule comprenant au moins un organe manuel (1) de commande et un moyen d'affichage d'informations concernant ladite fonction **caractérisé par le fait que** le moyen d'affichage comporte un afficheur luminescent (33), et qu'un moyen optique (16) est interposé entre l'afficheur (33) et l'organe manuel (1) de commande, celui-ci comprenant une surface (35) formant un écran de visualisation d'une image projetée depuis ledit afficheur par le moyen optique.

2. Dispositif selon la revendication 1, dans lequel le moyen optique (16) est formé d'une lentille interposée entre l'afficheur (33) et ladite surface (35) de l'organe de commande (1).

3. Dispositif selon l'une des revendications 1 et 2, dans lequel l'organe de commande (1) est un bouton rotatif.

4. Dispositif selon la revendication 3, dans lequel la surface (35) formant écran est disposée au centre du bouton.

5. Dispositif selon l'une des revendications précédentes, dans lequel la fonction commandée comprend, au moins, la ventilation, le chauffage ou la climatisation du véhicule.

6. Dispositif selon l'une des revendications 1 à 5, dans lequel la surface écran (35) est la face arrière d'une paroi translucide (14) traitée à cet effet.

7. Dispositif selon la revendication 2 et l'une des revendications 3 à 6, dans lequel le bouton de commande (1) est monté rotatif autour de l'axe focal (R) de la lentille (16).

## Claims

1. Function control device for a vehicle comprising at least one manual control element (1) and data display means relating to said function, **characterised in that** the display means comprises a light display device (33) and **in that** an optical means (16) is interposed between the display device (33) and the manual control element (1), this comprising a surface (35) forming a display screen for an image projected from said display device by the optical means.

2. Device according to Claim 1, in which the optical means (16) is formed by a lens interposed between the display device (33) and said surface (35) of the control element (1).

3. Device according to either of Claims 1 and 2, in which the control element (1) is a rotating button.

4. Device according to Claim 3, in which the surface (35) forming the screen is arranged in the centre of the button.

5. Device according to one of the preceding claims, in which the control function comprises at least the ventilation, the heating, or the air-conditioning of the vehicle.

6. Device according to one of Claims 1 to 5, in which the screen surface (35) is the rear face of a translucent wall (14) treated for this purpose.

7. Device according to Claim 2 and one of Claims 3 to 6, in which the control button (1) is mounted so as to rotate around the focal axis (R) of the lens (16).

## Patentansprüche

1. Vorrichtung zum Steuern einer Funktion eines Fahrzeugs, die zumindest ein manuelles Organ (1) zum Steuern und ein Anzeigemittel von Informationen in Zusammenhang mit der Funktion aufweist, **dadurch gekennzeichnet, dass** das Anzeigemittel eine Leuchtanzeige (33) aufweist, das ein optisches Mittel (16) zwischen der Anzeige (33) und dem manuellen Organ (1) zum Steuern eingefügt ist, dass dieses eine Oberfläche (35) aufweist, die einen Anzeigebildschirm eines Bilds bildet, das von dem Anzeiger durch das optische Mittel projiziert wird.

2. Vorrichtung nach Anspruch 1, bei dem das optische Mittel (16) aus einer Linse besteht, die zwischen der Anzeige (33) und der Oberfläche (35) des Steuerorgans (1) eingefügt ist.

3. Vorrichtung nach einem der Ansprüche 1 und 2, bei der das Steuerorgan (1) ein Drehknopf ist.

4. Vorrichtung nach Anspruch 3, bei der die Oberfläche (35), die den Bildschirm bildet, in der Mitte des Knopfs angeordnet ist.

5. Vorrichtung nach einem der vorhergehenden Ansprüche, bei der die gesteuerte Funktion mindestens die Belüftung, die Heizung oder die Klimatisierung des Fahrzeugs umfasst.

6. Vorrichtung nach einem der Ansprüche 1 bis 5, bei der die Oberfläche (35) des Bildschirms die Rückseite einer durchsichtigen Wand (14) ist, die dazu behandelt ist.

7. Vorrichtung nach Anspruch 2 und einem der Ansprüche 3 bis 6, bei der der Steuerknopf (1) drehend um die Brennachse (R) der Linse (16) montiert ist.
